# EUROPÄISCHE PATENTANMELDUNG

(11) **EP 1 004 803 A2**
(43) Veröffentlichungstag der Anmeldung: **31.05.2000**
(21) Anmeldenummer: 99123500.3
(22) Anmeldetag: 25.11.1999
(51) Int. Cl.: F16L 9/08

(54) **Druckrohr aus Spannbeton**

(30) Priorität: 25.11.1998 DE 29821095 U
(71) Anmelder: Baumgartner, Franz, 78532 Tuttlingen (DE)
(72) Erfinder: Baumgartner, Franz, 78532 Tuttlingen (DE)
(74) Vertreter: Behrendt, Arne, Dipl.-Ing.

(57) **Zusammenfassung**

Die Erfindung betrifft ein Druckrohr aus Spannbeton, insbesondere Spannbeton-Vorpreß-Druckrohr, dessen rohrförmiger Grundkörper (1) aus Beton mit einer in Längsrichtung des Rohres vorgespannten Bewehrung (2) versehen ist und von einem Mantel (7) aus aufgegossenem Deckbeton umgeben ist, der eine in Umfangsrichtung vertaufende vorgespannte Ringbewehrung (4) abdeckt. Um bei einem derartigen Druckrohr einen besseren Verbund zwischen Grundkörper (1) und Mantel (7) herzustellen, schlägt die Erfindung vor, daß die Ringbewehrung (4) in eine am Außenumfang des Grundkörpers (1) befindliche in Umfangsrichtung des Grundkörpers (1) verlaufende und dem Verlauf der Ringbewegung (4) folgende Nut eingelegt ist und dabei über die Nut in radialer Richtung vorsteht.

## Beschreibung

Die Erfindung betrifft ein Druckrohr aus Spannbeton, insbesondere Spannbeton-Vorpreß-Druckrohr, dessen rohrförmiger Grundkörper aus Beton mit einer in Längsrichtung des Rohres vorgespannten Bewehrung versehen ist und von einem Mantel aus aufgegossenem Deckbeton umgeben ist, der eine in Umfangsrichtung verlaufende vorgespannte Ringbewehrung abdeckt.

Bei nach dem Stande der Technik bekannten Druckrohren der genannten Art besteht die vorgespannte Ringbewehrung üblicherweise aus einem schraubenlinienförmig um den Rundkörper gewickelten Vorspanndraht mit 4 bis 7 mm Durchmesser. Diese Ringbewehrung dient in erster Linie dazu, die von innen in radialer Richtung auf das Druckrohr einwirkenden Druckkräfte aufzunehmen.

Ein Problem bei derartigen Druckrohren, insbesondere bei Druckrohren, die im sogenannten Vorpreß-Verfahren verlegt werden, besteht darin, daß sich der aufgegossene Mantel mitsamt der darin eingebetteten Ringbewehrung von dem Grundkörper ablöst und unter dem Einfluß der Vorpreßkräfte relativ zu dem Grundkörper verschiebt. Diese Gefahr ist dann besonders groß, wenn infolge der zu erwartenden hohen Druckbelastung die Ringbewehrung eng gewickelt werden muß. In diesem Fall reichen nämlich die verbleibenden Kontaktflächen zwischen dem Beton des Grundkörpers und dem aufgegossenen Deckbeton nicht aus, einen ausreichend festen Verbund zwischen dem Beton des Grundkörpers und dem Deckbeton herzustellen. Der Verwendung von dickeren Spanndrähten mit mehr als 10 mm Durchmesser sind Grenzen gesetzt, weil sich ein derartig dicker Spanndraht wegen seiner Eigensteifigkeit mit den herkömmlichen maschinellen Einrichtungen kaum noch für den Wickelvorgang handhaben läßt.

Es ist deshalb Aufgabe der Erfindung, das Druckrohr der eingangs genannten Art dahingehend weiterzubilden, daß ein besserer Verbund zwischen Grundkörper und Mantel hergestellt wird.

Zur Lösung dieser Aufgabe schlägt die Erfindung ausgehend vom Druckrohr der eingangs genannten Art vor, daß die Ringbewehrung in eine am Außenumfang des Grundkörpers befindliche, in Umfangsrichtung des Grundkörpers verlaufende und dem Verlauf der Ringbewehrung folgende Nut eingelegt ist und dabei über die Nut in radialer Richtung vorsteht.

Beim Druckrohr gemäß der Erfindung wird der Verbund zwischen dem Grundkörper und dem Mantel dadurch verbessert, daß die Ringbewehrung über einen Teil ihres Querschnittes in der Oberfläche des Grundkörpers versenkt angeordnet ist. Hierdurch ergibt sich ein insbesondere in Längsrichtung des Druckrohres formschlüssiger Verbund zwischen dem Mantel und dem Grundkörper, und zwar dadurch, daß die Ringbewehrung sowohl in dem Grundkörper als auch in dem Mantel formschlüssig eingebettet ist. Dieser Verbund ist natürlich auch dann gewährleistet, wenn die Ringbewehrung verhältnismäßig eng gewickelt ist.

Besondere Vorteile ergeben sich, wenn die Ringbewehrung in Umfangsrichtung des Grundkörpers vorgespannt ist und an den Enden der Ringbewehrung im Bereich der Enden des Grundkörpers mittels in das Volumen des Grundkörpers eingreifender Verankerungsvorrichtungen an dem Grundkörper festgelegt ist.

Bei dieser Vorspannung der Ringbewehrung wird sichergestellt, daß der Bewehrungsdraht über die gesamte Länge des Grundkörpers fest in den Nutengrund gedrückt wird, so daß über die gesamte Länge ein fester Verbund zwischen der Ringbewehrung und dem Grundkörper sichergestellt ist. Die Vorspannung in Umfangsrichtung sorgt darüber hinaus dafür, daß das so bewehrte Druckrohr den von innen auf es einwirkenden Druckkräften von vornherein besser standhält.

Eine besonders bevorzugte Ausführungsform der Erfindung sieht vor, daß die Ringbewehrung als Litze mit einer Vielzahl von Drähten ausgebildet ist. Die Verwendung einer solchen Litze als Ringbewehrung hat den Vorteil, daß große Bewehrungsquerschnitte eingebaut werden können, ohne daß die Handhabung der Ringbewehrung bei der Herstellung der Druckrohre Schwierigkeiten macht. Solche Litzen sind nämlich auch bei verhältnismäßig großem Materialquerschnitt und hoher Zugfestigkeit sehr biegeweich und können dementsprechend ohne Schwierigkeiten in Herstellungseinrichtungen verwendet werden, die für die Verwendung der üblichen dünnen Spanndrähte ausgelegt sind. Außerdem ermöglicht die Verwendung von solchen Litzen verhältnismäßig große Materialquerschnitte, so daß die damit hergestellte Ringbewehrung nicht eng gewickelt zu werden braucht, sondern verhältnismäßig große Abstände zwischen den einzelnen Wickelgängen haben kann. Hierdurch verbessert sich wiederum der Verbund zwischen dem Grundkörper und dem aufgegossenen Mantel. Schließlich verbinden sich solche Litzen aufgrund ihrer unregelmäßig gestalteten Oberflächen besonders intensiv mit dem sie einbettenden Beton, mit dem Ergebnis, daß der Verbund zwischen Grundkörper und Mantel des Druckrohres noch weiter verbessert wird.

Gegebenenfalls kann der Mantel aus Deckbeton zusätzlich noch durch ein in seinem Volumen angeordnetes Bewehrungsgitter bewehrt sein, wodurch der Mantel selbst so stabilisiert wird, daß er sich nicht von der Ringbewehrung ablösen kann.

Ein Ausführungsbeispiel der Erfindung wird im folgenden anhand der Zeichnungen näher erläutert. Es zeigen:

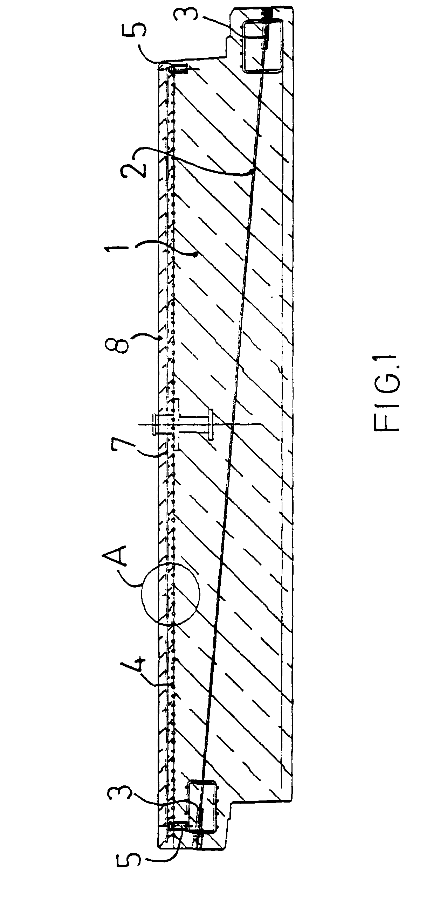

- Fig. 1:: einen Längsschnitt durch ein Druckrohr gemäß der Erfindung in einer ersten Ausführungsform;

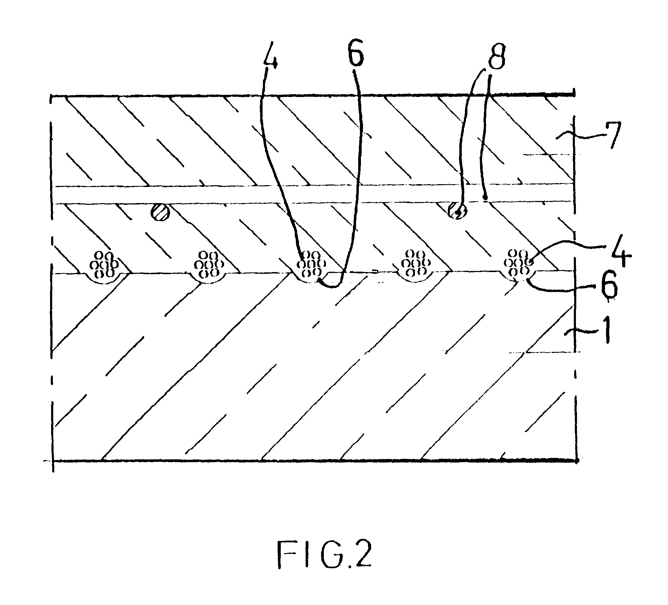

- Fig. 2:: in vergrößertem Maßstab das Detail A der Fig. 1;
- Fig. 3:: einen Schnitt durch einen Endabschnitt der Wandung eines Druckrohres gemäß der Erfindung in einer zweiten Ausführungsform.

In der Zeichnung ist der aus Beton hergestellt Grundkörper des Druckrohres mit dem Bezugszeichen 1 bezeichnet. In den Grundkörper 1 ist eine sich in dessen Längsrichtung erstreckende Spannbewehrung 2 eingebettet, die an den Enden des Grundkörpers 1 an in den Grundkörper 1 eingegossenen, nachstellbaren Verankerungsvorrichtungen 3 verankert ist. Um den äußeren Umfang des Grundkörpers 1 ist eine schraubenlinienförmige Ringbewehrung 4 gewickelt. Diese Ringbewehrung 4 ist beim Ausführungsbeispiet als aus mehreren Drähten zusammengesetzte Litze ausgebildet, die in Umfangsrichtung des Grundkörpers 1 vorgespannt ist und an ihren Enden mittels in das Volumen des Grundkörpers 1 eingreifender Verankerungsvorrichtungen 5 an dem Grundkörper 1 befestigt ist.

Die Ringbewehrung 4 verläuft in einer sich schraubenlinienförmig um den Grundkörper 1 erstreckenden Nut 6. Die Nut 6 ist nur so tief, daß die in sie eingelegte Ringbewehrung 4 über mehr als die Hälfte ihres Durchmessers nach außen über den äußeren Umfang des Grundkörpers 1 vorsteht.

Die Ringbewehrung 4 ist nach außen hin von einem aufgegossenen Mantel 7 aus Deckbeton abgedeckt. In diesen Deckbeton ist zusätzlich ein Bewehrungsgitter 8 eingebettet, welches dem Mantel 7 aus Deckbeton den notwendigen Zusammenhalt gibt. Der aufgegossene Deckbeton bettet die Ringbewehrung 4 ein und füllt außerdem die verbleibenden Hohlräume der Nut 6.

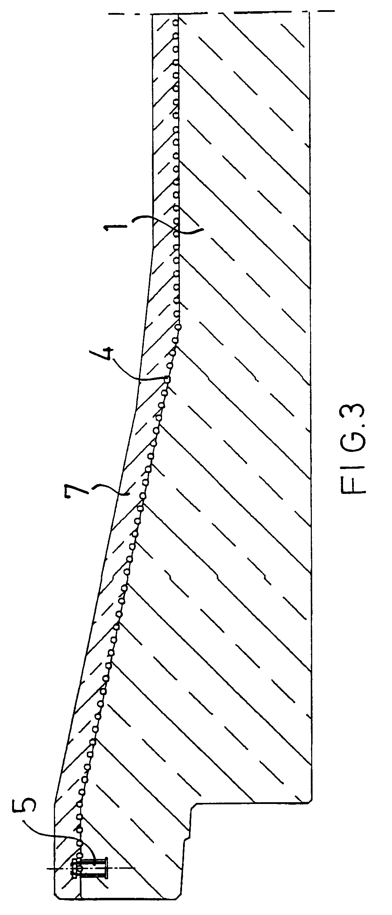

Beim Ausführungsbeispiel der Fig. 3 hat das Druckrohr außen eine glockenförmige Aufweitung, so daß sich eine etwa konisch verlaufende Außenkontur ergibt. Insbesondere im Bereich dieser konischen Außenkontur ist die erfindungsgemäß vorgeschlagene, in eine Nut 6 eingebettete Ringbewehrung 4 wichtig, weil dort die Gefahr der Ablösung des Mantels 7 vom Grundkörper 1 besonders groß ist.

## Patentansprüche

1. Druckrohr aus Spannbeton, insbesondere Spannbeton-Vorpreß-Druckrohr, dessen rohrförmiger Grundkörper aus Beton mit einer in Längsrichtung des Rohres vorgespannten Bewehrung versehen ist und von einem Mantel aus aufgegossenem Deckbeton umgeben ist, der eine in Umfangsrichtung verlaufende vorgespannte Ringbewehrung abdeckt,
**dadurch gekennzeichnet,**
daß die Ringbewehrung (4) in eine am Außenumfang des Grundkörpers (1) befindliche, in Umfangsrichtung des Grundkörpers (1) verlaufende und dem Verlauf der Ringbewehrung (4) folgende Nut (6) eingelegt ist und dabei über die Nut (6) in radialer Richtung vorsteht.

2. Druckrohr nach Anspruch 1, dadurch gekennzeichnet, daß die Enden der vorgespannte Ringbewehrung (4) im Bereich der Enden des Grundkörpers (1) mittels in das Volumen des Grundkörpers (1) eingreifender Verankerungsvorrichtungen (5) an dem Grundkörper (1) festgelegt ist.

3. Druckrohr nach den Ansprüchen 1 oder 2, dadurch gekennzeichnet, daß die Ringbewehrung (4) als Litze mit einer Vielzahl von Drähten ausgebildet sind.

4. Druckrohr nach einem der Ansprüche 1 bis 3, dadurch gekennzeichnet, daß der Mantel (7) aus Deckbeton zusätzlich durch ein in sein Volumen eingebettetes Bewehrungsgitter (8) bewehrt ist.
